# EUROPEAN PATENT APPLICATION

(11) **EP 1 262 301 A2**
(43) Date of publication of application: **04.12.2002**
(21) Application number: 02012110.9
(22) Date of filing: 31.05.2002
(51) Int. Cl.: B29C 45/14, B60C 1/00

(54) **Wheels for transportation vehicles**

(30) Priority: 31.05.2001 GB 0113152
(71) Applicant: Colson Castors Limited, Hill Top, West Bromwich, B70 0TZ (GB)
(72) Inventor: Spencer, Richard John, Hill Top, B70 OTZ, West Bromwich (GB)
(74) Representative: Lally, William

(57) **Abstract**

A castor wheel for a transportation vehicles comprises an axle assembly (12), a hub (10), a polyurethane tread (14), and an elastomeric infill (16), interposed between the hub (10) and the polyurethane tread (14). The wheel is manufactured by a multi-stage injection moulding process, in which the tread (14) and core (18) are formed separately by injection moulding, located in a mould, whilst the elastomeric infill (16) is injection moulded between them. A mechanical interlock is achieved directly between the tread (14) and the elastomeric infill (16), whilst the hub (10) and the infill (16) are directly chemically bonded.

## Description

### Description of Invention

This invention relates to wheels for transportation vehicles, and to methods of manufacturing such wheels. In particular it relates to a wheel for a transportation vehicle that may be used in light warehouse facilities, or retail premises such as supermarkets, to carry goods.

Such transportation vehicles are generally rectangular in plan view, typically prefabricated from a metal framework, and comprise a wheel, typically a castor wheel, at each of the four corner regions.

Conventionally, wheels for such transportation vehicles are made from polyolefin materials, since these materials are hard and provide good wear characteristics. Another reason for the widespread use of polyolefin materials is that these materials can be securely hydrogen-bonded together. This enables the wheel to be conveniently manufactured from a plurality of parts bonded together.

Alternatively, or additionally, the plurality of parts may be otherwise chemically or mechanically bonded together, for example by use of an adhesive.

Conventional transportation vehicles do generate an unpleasant level of noise in use. Considerable development work has been expended in an attempt to reduce this. For example, both resilient spokes and infills made of an elastomeric material have been incorporated into these types of wheel in the past.

Despite this expenditure and effort, to date only incremental reductions in the level of noise generated have been forthcoming. There is, therefore, a need for a wheel for a transportation vehicle that has a reduced level of noise in use.

This invention provides a wheel for a transportation vehicle comprising:
a) a hub adapted to contain an axle assembly;
b) a ground engaging tread; and
c) an intermediate member between the hub and the tread,
characterised in that
i) the intermediate member and the tread are of plastics materials, the intermediate member being of a material softer than that of the tread, and
ii) the tread is directly mechanically interlocked with the intermediate member.

A wheel made in accordance with the invention may produce significantly less noise in use than conventionally constructed wheels.

The hub is preferably a relatively rigid material such as a polyolefin, for example a polypropylene. The ground engaging tread, however, is preferably formed from a material that is softer than the hub. A polyurethane material is one example of a material that has good wear and low sound transmission characteristics. Another example would be a rubber material.

Preferably the intermediate member has a hardness of less than 75 Shore A, preferably less than 70 Shore A, whilst the hub conveniently has a hardness of greater than 90 Shore A, typically being 95 Shore A. Preferably the tread has a hardness greater than 85 Shore A.

The ground engaging tread preferably comprises no more than 50% of the radius of the wheel. Conveniently the ground engaging tread comprises a thin layer of no more than 25%, preferably substantially 15%, of the radius of the wheel. The layer preferably extends circumferentially around the rim of the wheel, and conveniently provides at least substantially the whole of the circumferential surface of the wheel. By use of a suitable material, for example polyurethane or rubber, the ground engaging tread can be relatively thin whilst still providing adequate cushioning.

The hub may further comprise a bearing, for example a roller or a ball bearing, that interfaces between the axle and the hub. The bearing surface may also be a low friction material such as nylon.

The invention is particularly suitable for application to castor wheels, that is wheels which are pivotable on a vertical axis, but it may of course be utilised in other types of wheel.

Preferably the component parts of the wheel, particularly the hub and the ground engaging tread, are injection moulded. Thus a method of manufacturing a wheel for a transportation vehicle comprises forming a relatively rigid hub part, forming a ground engaging tread, and injection moulding an elastomeric infill between the hub and the tread. Conveniently the hub and the elastomeric infill are directly chemically bonded, whilst preferably the ground engaging tread and the infill are directly mechanically interlocked.

A detailed description of two embodiments of a wheel for a transportation vehicle, which have been selected by way of example, follows. The description is to be read with reference to the accompanying drawings, in which:
Figure 1 shows schematically a front section view through the centreline of a first embodiment of a wheel for a transportation vehicle;
Figure 2 shows a schematically a side view of the embodiment of Figure 1;
Figure 3 shows schematically a front section view through a second embodiment of a wheel for a transportation vehicle; and
Figure 4 shows schematically a side view of the embodiment of Figure 3.

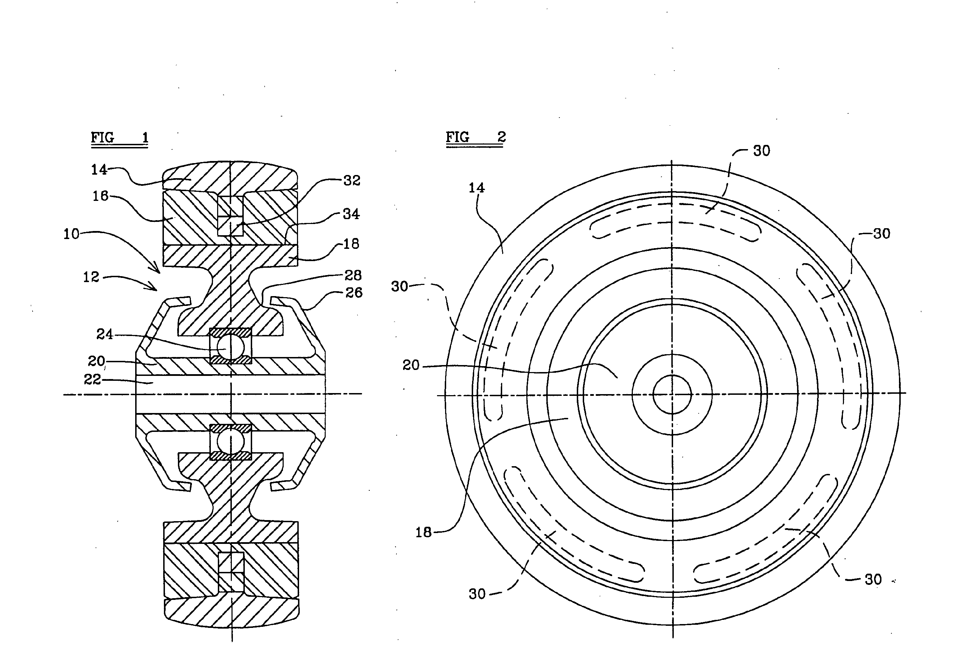

A first embodiment of a castor wheel for a transportation vehicle is shown in Figures 1 and 2. The wheel comprises an axle assembly indicated generally at 12, a hub indicated generally at 10, a polyurethane tread 14, and an elastomeric intermediate member providing an infill 16, which is interposed between the hub 10 and the polyurethane tread 14.

The axle assembly 12 comprises a hub-guard 20, and the inner race of a bearing assembly which is shown at 24. An axle of the wheel (not shown) may be tightly fitted to the axle assembly when the wheel is assembled.

The hub 10 comprises a polypropylene core 28 and a polypropylene circumferential flange 18, with an extensive outer surface. The outer surface of the circumferential flange forms an extensive interface with the elastomeric infill at 34.

The polyurethane tread 14 extends circumferentially around the outer surface of the hub 10. It is relatively thin in radial depth compared with the elastomeric infill 16 and the hub 10. The tread 14 is connected to the hub 10 via the elastomeric infill 16, being mechanically interlocked with the infill 16.

The wheel is manufactured by a multi-stage injection moulding process. The tread 14 and the core 18 are formed separately by injection moulding. The tread 14 is moulded with elongate radial channels 30, which extend through the width of the tread 14. The tread 14 and the core 18 are then held in place in a mould whilst the elastomeric infill 16, conveniently of a polypropylene-based material is injection moulded between them, and fills the channels 30. Supporting elements 32 of polyurethane thus extend radially inwards of channels 30, as shown in Figure 1. Thus a mechanical interlock between the tread 14 and the elastomeric infill 16 is achieved. Furthermore the hub 10 and the elastomeric infill 16 become hydrogen-bonded together during the manufacturing process forming an interface shown at 34.

In use, the hub 10, tread 14 and infill 16 rotate about the axle, the hub forming a rigid structure that supports the wheel. The polyurethane tread 14 forms the interface between the wheel and the ground, and reduces the amount of noise generated by the wheel.

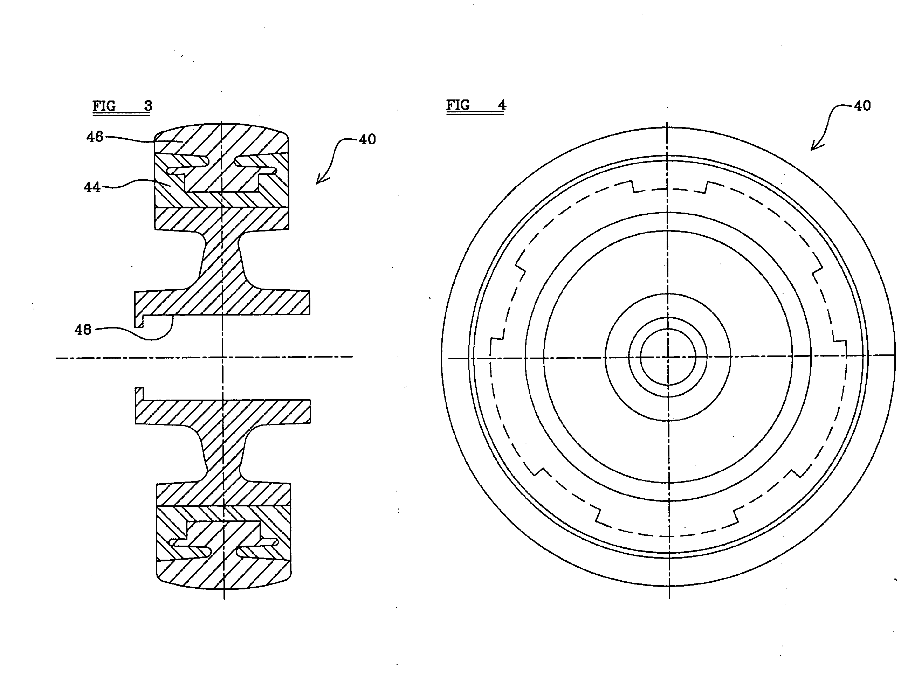

Figures 3 and 4 show schematically a second embodiment of a castor wheel for a transportation vehicle, that comprises a hub of polypropylene, shown generally at 40, a ground-engaging tread 46, and an elastomeric infill 44. The tread 46 extends circumferentially over the elastomeric infill 44, and the hub forms a roller bearing with an axle (not shown) of the wheel, along an interface surface 48.

The tread 46 is mechanically interlocked with the elastomeric infill 44, as shown in Figure 3. The tread 46 is interleaved with the infill 44 by the use of axially symmetrical protrusions on each.

As shown in Figures 2 and 4 the mechanical interlock in both embodiments is rotationally asymmetrical. This assists in keying the tread securely into the infill.

These wheels have been found to significantly reduce the noise generated by transportation vehicles. When a semi-flexible polyurethane tread is added to the wheel the noise generated has been found to be reduced by around 8 - 10 dB.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A wheel for a transportation vehicle, comprising:
a) a hub (10) adapted to contain an axle assembly;
b) a ground engaging tread (46); and
c) an intermediate member (44) between the hub and the tread, **characterised in that**:
ii) the intermediate member (44) and the tread (46) are both of plastics material, with the intermediate member (44) being of a material softer than the tread (46); and
ii) the tread (46) is directly mechanically interlocked with the intermediate part (44).

2. A wheel according to claim 1 wherein the hub is of plastics material, having a hardness greater than that of the tread.

3. A wheel according to one of claims 1 and 2 wherein the hub and tread are of different materials, with the intermediate member being directly chemically bonded to the hub.

4. A wheel according to any one of the preceding claims wherein the intermediate member has a hardness less than 75 Shore A, preferably less than 70 Shore A.

5. A wheel according to claim 4 wherein the intermediate member is of a polypropylene-based material.

6. A wheel according to any one of the preceding claims wherein the hub has a hardness greater than 90 Shore A, preferably greater than 95 Shore A.

7. A wheel according to claim 6 wherein the hub is of polypropylene.

8. A wheel according to any one of the preceding claims wherein the tread has a hardness greater than 85 Shore A.

9. A wheel according to claim 8 wherein the tread is of polyurethane.

10. A wheel according to any preceding claim in which the ground engaging tread comprises a thin layer that extends circumferentially around the rim of the wheel and comprises no more than 50%, conveniently no more than 25% and preferably substantially 15% of the radius of the wheel.

11. A wheel according to any claim dependent on claim 5 in which the hub, tread and intermediate member are injection moulded.

12. A method of manufacturing a wheel for a transportation vehicle comprising:
forming a relatively rigid hub part; and
forming a ground engaging tread;
**characterised in that** the method includes injection moulding an elastomeric infill between the hub and the tread.

13. A method according to claim 12 in which the hub and the elastomeric infill are directly chemically bonded.

14. A method according to claim 12 or claim 13 in which the ground engaging tread and the infill are directly mechanically interlocked.

15. A wheel for a transportation vehicle that comprise a relatively rigid hub part, adapted to contain an axle, and a ground engaging tread, **characterised in that** the hub comprises a relatively rigid elastomeric material and the tread comprises an elastomeric material that is softer than the hub.
